# EUROPEAN PATENT APPLICATION

(11) **EP 4 768 111 A1**
(43) Date of publication of application: **01.07.2026**
(21) Application number: 25225665.6
(22) Date of filing: 19.12.2025
(51) Int. Cl.: B01D 29/60, B01D 35/12, B01D 35/143, B01D 35/16, B01D 37/04, B01D 46/00, B01D 46/44

(54) **PREDICTIVE MAINTENANCE CONTROLS FOR FILTERS IN LIQUID COOLING APPLICATIONS**

(30) Priority: 30.12.2024 US 202463739979 P
(71) Applicant: Vertiv Corporation, Westerville, OH 43082 (US)
(72) Inventor: BREUER, Thomas Christopher, Westerville, 43082 (US); KING, Jeremy, Westerville, 43082 (US); VOIGT, Tyler William, Westerville, 43082 (US)
(74) Representative: Beal, James Michael

(57) **Abstract**

A liquid cooling system such as a liquid cooling distribution unit includes a liquid circuit for recirculating a cooling liquid, one or more liquid pumps, one or more liquid filters, pressure sensors, and a controller for determining differential pressures across the one or more liquid filters. In embodiments, the controller implements a filter health monitoring scheme for predicting the time for filter replacement, and in some embodiments, implements a low pump speed operating mode for system protection.

## Description

### CROSS REFERENCE TO RELATED APPLICATION

This application claims the benefit of priority of U.S. Application Number 63/739,979 filed December 30, 2025.

### TECHNICAL FIELD

The present disclosure is directed generally to liquid cooling solutions for data center environments, and more particularly, to systems and methods for monitoring filter health in liquid cooling systems.

### BACKGROUND

Cooling challenges continue to escalate as new server and graphical processing unit (GPU) technologies, machine learning, artificial intelligence, and high-performance computing drive heat densities ever higher in the data center environment. Liquid cooling is rapidly emerging as the technology of choice for efficiently handling power-dense hot spots.

Some liquid cooling solutions utilize self-contained liquid cooling units for end of row or perimeter placement. Such units may include liquid handling components such as plate heat exchangers, expansion vessels, pumps, valves, and filters, as well as control components such as various sensors and controllers. Such units may manage an internal liquid circuit that works in conjunction with a separate facility circuit to transfer heat. Considering the performance of plate heat exchangers is dependent on the avoidance of sediment buildup and corrosive effects, it is critically important in liquid cooling units to ensure contamination-free liquid. As such, filters are utilized to filter the recirculating liquid to maintain optimal thermal management and system efficiency to ensure cooling performance to protect sensitive electronic equipment.

In traditional cooling systems such as liquid cooling units, filters are replaced according to a routine maintenance schedule or on demand in the event of filter failure. In some instances, routine replacement may be too late or too early, respectively allowing a liquid cooling system to operate inefficiently or fail or replacing good filters prematurely.

Therefore, to replace filters at the appropriate time to ensure optimal system performance, what is needed is a predictive maintenance scheme for monitoring filter health.

### SUMMARY

According to a first aspect, the present disclosure is directed to a liquid cooling unit including a liquid circuit configured to recirculate a liquid, one or more pumps disposed in the liquid circuit configured to pump the liquid, one or more filters disposed in the liquid circuit configured to filter the liquid, pressure sensors disposed in the liquid circuit configured to measure liquid pressure in the liquid circuit, and a controller, communicatively coupled to the pressure sensors and including one or more processors. In embodiments, the controller is configured to receive outputs from the pressure sensors and determine, from the outputs received from the pressure sensors, a differential pressure across each of the one or more filters.

In some embodiments, the pressure sensors include, for each of the one or more filters, a first pressure sensor disposed at an inlet side of the filter and a second pressure sensor disposed at an outlet side of the filter, wherein the differential pressure is determined by a difference between the liquid pressure entering the filter and the liquid pressure exiting the filter.

In some embodiments, the controller is further configured to implement a monitoring scheme for monitoring the differential pressure for the one or more filters according to a preselected monitoring schedule.

In some embodiments, the controller is further configured to extrapolate, from the differential pressures monitored according to the preselected monitoring schedule, an estimation of when the one or more filters will perform at a level below a preselected threshold performance level.

In some embodiments, the controller is further configured to determine a reference differential pressure for each of the one or more filters at a time of installation of the one or more filters in the liquid circuit.

In some embodiments, the controller is further communicatively coupled to the one or more pumps, and is further configured to, when the liquid cooling unit operates with the one or more filters near or at end of life, control the one or more pumps to operate in a low pump speed operating mode.

In some embodiments, the controller is further configured to generate one or more alarms indicative of a need for at least one of filter maintenance and filter replacement.

In some embodiments, the liquid cooling unit is a self-contained unit comprising a housing and one or more plate heat exchangers disposed in the housing.

In some embodiments, the liquid cooling unit is configured to be utilized in a data center to cool electronic equipment.

According to another aspect, the present disclosure is directed to a liquid cooling system including a liquid circuit configured to recirculate a liquid, one or more pumps disposed in the liquid circuit configured to pump the liquid, one or more filters disposed in the liquid circuit configured to filter the liquid, pressure sensors disposed in the liquid circuit configured to measure liquid pressure in the closed liquid circuit, and a controller, communicatively coupled to the pressure sensors and including one or more processors, configured to receive outputs from the pressure sensors, and determine, from the outputs received from the pressure sensors, a differential pressure across the one or more filters.

According to a further aspect, the present disclosure is directed to a method for monitoring health of one or more filters in a cooling system or cooling unit including a liquid circuit configured to recirculate a liquid, one or more pumps disposed in the liquid circuit configured to pump the liquid, one or more filters disposed in the liquid circuit configured to filter the liquid, pressure sensors disposed in the liquid circuit configured to measure liquid pressure in the liquid circuit, and a controller, communicatively coupled to the pressure sensors, and including one or more processors. In embodiments, the pressure sensors are configured to measure liquid pressure at an inlet side and at an outlet side of each of the one or more filters, and the controller is configured to determine a differential pressure across each of the one or more filters from the liquid pressures measured at the inlet side and the outlet side of each of the one or more filters.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the present disclosure disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIGS. 1A and 1B are respective front and back views of a non-limiting example of a liquid cooling unit according to the present disclosure;
FIG. 2 is a schematic diagram illustrating a liquid cooling circuit according to the present disclosure;
FIG. 3 is a flow chart illustrating a control scheme for monitoring filtering health in a liquid cooling system or liquid cooling unit according to the present disclosure;
FIG. 4 is a flow chart illustrating a control scheme for implementing a low pump speed operating mode in a liquid cooling system or liquid cooling unit according to the present disclosure;
FIG. 5 is a graph illustrating a predictive maintenance calculation for filter change in a liquid cooling system or liquid cooling unit according to the present disclosure; and
FIG. 6 is a graph illustrating a predictive maintenance calculation for operating a liquid cooling system or liquid cooling unit in a low pump speed operating mode according to the present disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Systems and methods according to the present disclosure provide filter health and predictive maintenance solutions for liquid cooling systems such as self-contained liquid cooling distribution units. In embodiments, the systems and methods according to the present disclosure utilize pressure data and filter performance data to predict the useful life of one or more system filters such that filter maintenance and/or replacement can be proactively scheduled to ensure continuous and optimal system performance. The systems and methods disclosed herein are applicable to any system, liquid or otherwise, utilizing filters. In an example application, the systems and methods disclosed herein may be integrated into a liquid cooling unit to realize a reduction in filter failures and an increase in reliability of the liquid cooling unit, among other benefits and advantages.

In embodiments, the systems and methods disclosed herein are directed to a filter health scheme for monitoring filter performance by monitoring a differential pressure of one or more filters disposed in a cooling circuit such as a liquid cooling circuit. In embodiments, the monitoring schedule may be preselected and adjusted to provide a customizable monitoring scheme. In embodiments, differential pressures and/or scheduled maintenance exceeding a preselected threshold may trigger one or more warnings/alarms indicative of a required action to be taken, for instance filter maintenance and/or replacement. In some embodiments, the monitoring scheme may further include a low pump speed operating mode (e.g., 'limp' mode) to ensure continual system performance while protecting system components and cooled electronic components until maintenance can be performed. For example, the low pump speed mode may be implemented when a differential pressure of the one or more pumps nears or exceeds a preselected threshold value.

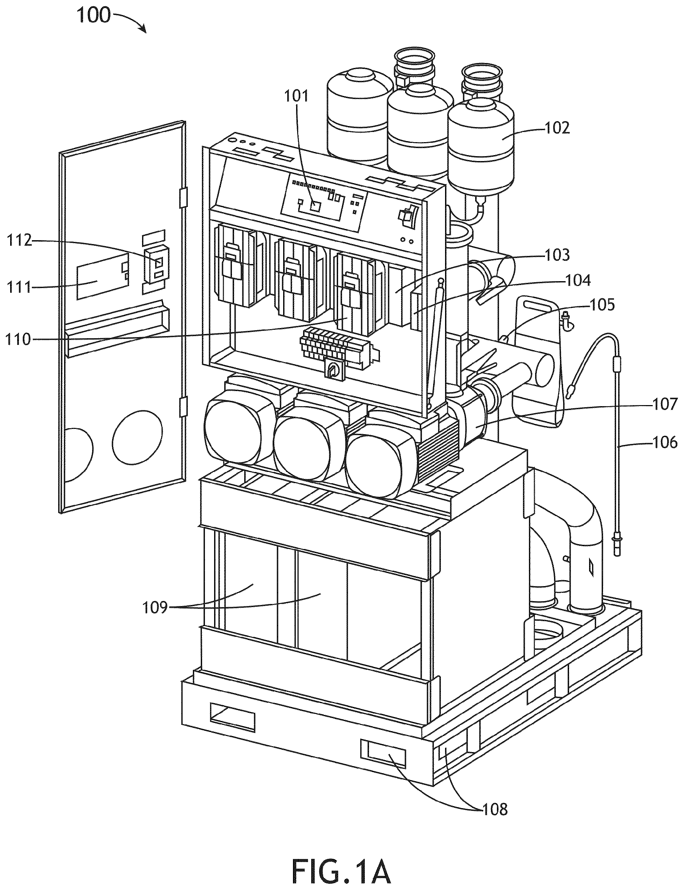

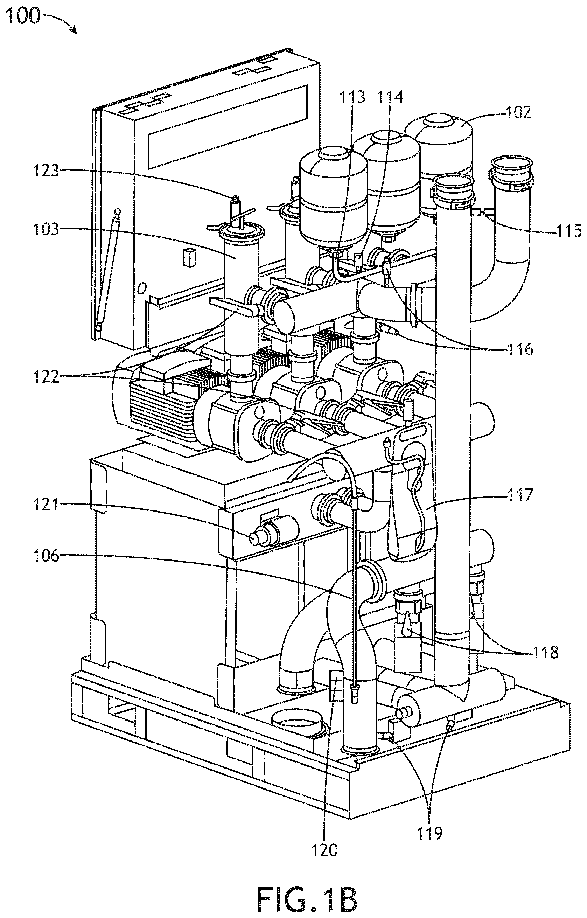

FIGS. 1A and 1B illustrate respective front and back views of a non-limiting example of a liquid cooling system implemented as a liquid cooling unit 100. In embodiments, the liquid cooling unit 100 may be self-contained and work in conjunction with a separate liquid supply circuit in a facility such as a data center. In embodiments, the liquid cooling unit 100 may be positioned near heat-generating electronic equipment to absorb heat.

FIG. 1A shows a front view of the liquid cooling unit 100 with unit panels removed for clarity. In embodiments, the liquid cooing unit 100 includes a controller 101 including one or more processors, one or more expansion vessels 102, one or more primary filters 103, a power supply 104, one or more level sensors 105, a filling wand 106, one or more pumps 107, forklift access 108, one or more plate heat exchangers 109, one or more pump inverter drivers 110, a controller touchscreen 111, and one or more environment sensors 112.

FIG. 1B shows a rear view of the liquid cooling unit 100 with unit panels removed for clarity. In embodiments, the liquid cooling unit further includes manual air vents 113 associated with the expansion vessels 102, a pressure relief valve 114, a secondary flow meter 115, one or more unit pressure sensors 116, a flexible make-up container 117, one or more primary cooling valves 118, one or more drain valves 119, a primary flow meter 120, a fill pump 121, one or more filter/pump isolation valves 122, one or more secondary filters 103, and one or more auto air vents 123 fitted to each filter housing and pump inlet manifold. As used herein, the primary and secondary filters may be referred to collectively as "the filters" or "the one or more filters" labeled 103. In embodiments, the liquid cooling unit 100 may be controlled on-site and/or remotely.

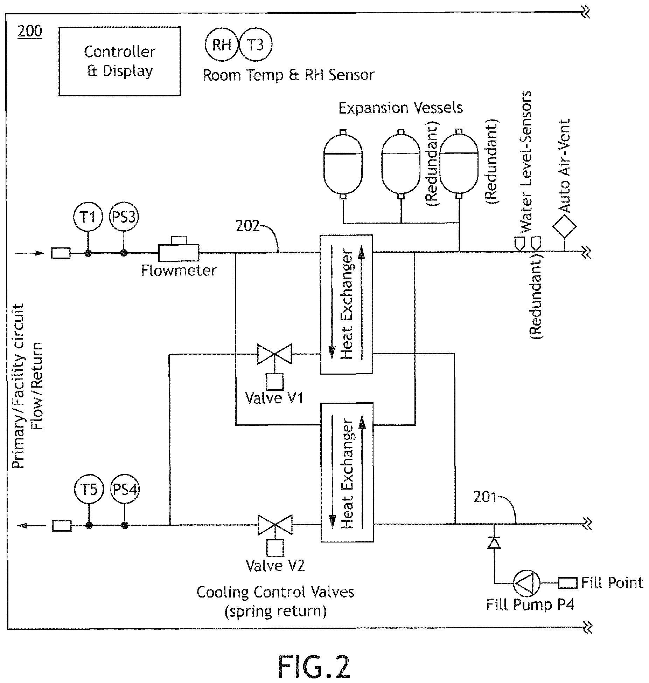

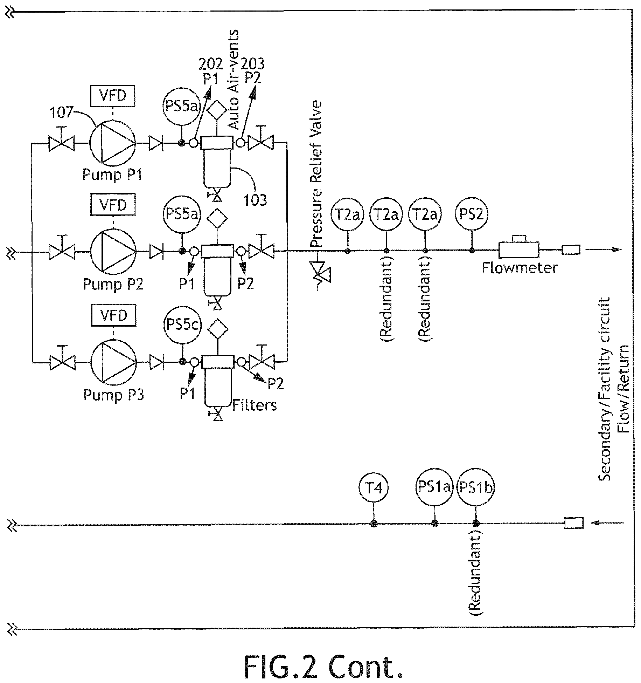

FIG. 2 is a schematic diagram illustrating the above components utilized and positioned in a cooling circuit 200 of a cooling system such as the liquid cooling unit 100 illustrated in FIGS. 1A and 1B. In embodiments, the cooling circuit 200 includes one or more liquid circuits 201, 202 for circulating or recirculating a liquid, for instance water, a glycol/water mixture, etc. In embodiments, a liquid cooling system may include two cooling circuits, the first being a refrigerant circuit 201 (e.g., primary circuit) for cooling the "technical" liquid, and the second being the "technical" liquid circuit 202 (e.g., secondary circuit) for cooling the electronic equipment. In embodiments, the technical liquid circuit 202 may be a closed circuit that provides a supply of cooling liquid to the electronic equipment, either through indirect cooling (e.g., a rack mounted rear door heat exchanger), or direct cooling (e.g., cold plates at chip level). In embodiments, the technical liquid circuit may be a low pressure sealed system, with the heat removed from high heat density areas of electronic equipment rejected to an external cooled water source (e.g., refrigerant circuit 201) via a low pressure drop plate heat exchanger. In embodiments, the technical liquid circuit 202 ensures that the cooling liquid in a data center environment can be kept to a minimum volume, is closely controlled for flow, pressure, and temperature (e.g., with condensation control) and can be accurately maintained for liquid quality (e.g., with filtration and additives). In embodiments, the primary cooling source may be a chilled water system (e.g., either dedicated or from a building system), liquid cooler, cooling tower or dry air cooler, depending on the desired secondary temperature and heat transfer duty.

The one or more filters 103 are included in the technical liquid circuit 202 to, for example, filter contaminates that can enter the liquid stream and potentially clog the cold plates that cool the electronic equipment (e.g., servers). In use over time, the filters 103 can become clogged resulting in a large pressure drop across the filters 103 consequently causing the pumps 107 to increase power to maintain a constant liquid flow. When the liquid flow is maximized when a filter is clogged, there is a risk of filter breakage resulting in filter parts and contaminants being released into the cold plate that can degrade performance and/or cause damage.

Each filter 103 is associated with a first pressure sensor 202 disposed at an inlet/upstream side of the filter 103, and a second pressure sensor 203 disposed at an outlet/downstream side of the filter 103. Each sensor 202, 203 may be a pressure transduced configured to measure pressure in the liquid circuit at its respective side of the filter 103. Thus, for the example of the three parallel liquid paths and pump/filter configuration shown in FIG. 2, as viewed in the schematic, the 'upper' liquid path includes in series a pump 107, a first pressure sensor 202, a filter 103, and a second pressure sensor 203 (and optionally one or more intermediate valves and other components), likewise the 'middle' and 'lower' liquid paths include the same series pump/pressure sensor/filter/pressure sensor arrangement.

In use, the first pressure sensor 202 positioned on the inlet/upstream side of the filter 103 is configured to obtain a measure of liquid pressure (P1) in the liquid circuit entering the filter, and the second pressure sensor 203 positioned on the outlet/downstream side of the filter 103 is configured to obtain a measurement of liquid pressure (P2) in the liquid circuit exiting the filter. From the measurements (P1 and P2) of liquid pressure, a differential pressure (DP) can be obtained for each filter 103 to determine a performance status of the filter 103. For example, a new filter 103 at the time of installation may return a substantially equal inlet and outlet liquid pressure measurement considering the minimal flow restriction provided by a new filter 103. In embodiments, the differential pressure at the time of installation of a new filter 103 may correspond to a reference differential pressure measurement as a baseline to be compared against future differential pressure measurements.

In embodiments, the monitoring scheme may further include monitoring the speed of the pump motors 107 associated with the respective filters 103. In embodiments, variable frequency drives (VFD) provide precise control over the speed of the pump motor allowing the pumps to operate at the optimal speed for a given application for improved performance and energy consumption. In use, a VFD functions by adjusting the frequency of electrical power supplied to a motor, which in turn changes the speed of the motor.

Filter performance monitoring and pump speed monitoring may be used to implement two control routines, that when operated in conjunction with each other, can be used to predict maintenance schedules as well as prevent catastrophic failure. Unlike traditional maintenance methods that rely on fixed schedules or reactive responses to filter clogs, these schemes leverage real-time data and advanced analytics to predict when a filter will need servicing and/or replacement. Such precision allows for maintenance to be performed in-time, optimizing resource use, and minimizing system downtime. Additionally, the integration of predictive algorithms enhances the reliability and efficiency of the cooling system, leading to longer equipment life and reduced operational costs.

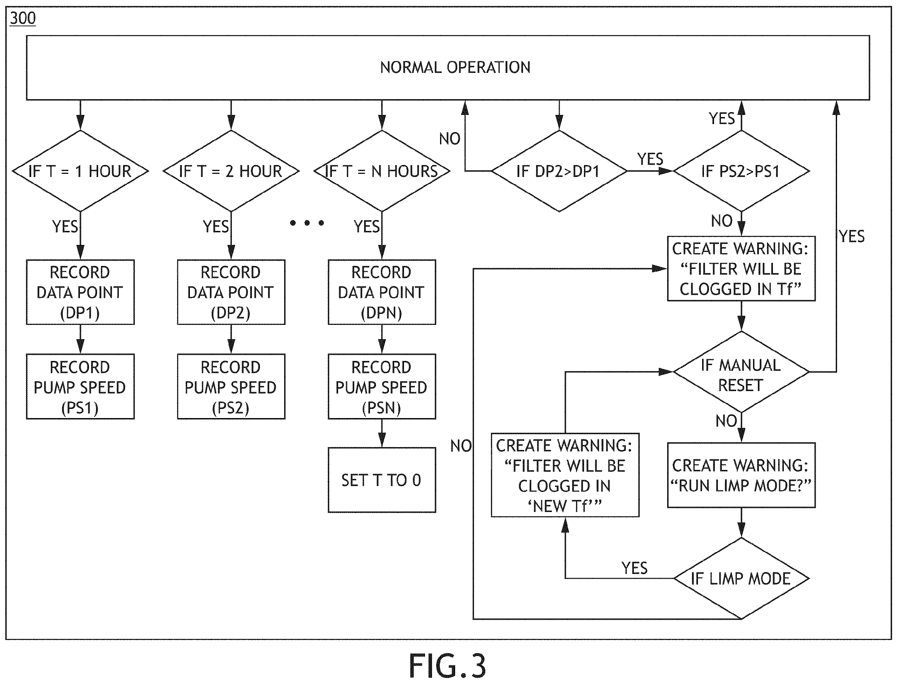

FIG. 3 is a flow chart of a control scheme 300 according to the present disclosure illustrating a control routine for monitoring the differential pressure and generating a warning/alarm based on a predictive maintenance calculation as discussed below. By changing the sampling rate and increasing the amount of sample points, the resolution can be increased. Differential pressure (DP) in the flow chart is the differential pressure marked at a certain time point, wherein the differential pressure (DP) is the 'high' side of the pressure minus the 'low' side of the pressure. Pump speed (PS) in the flow chart is the pump speed for the technical liquid pump. Time (T) in the flow chart represents a timer counting in, for example, seconds. In the flow chart, the user has the option to run 'limp' mode (e.g., protection mode) in which the pump speed is reduced to a minimal operable flow based on, for example, manufacturer specifications. In embodiments, the 'limp' mode may be implemented in the event parts or services are not readily available for changing the one or more filters 103. By entering 'limp' mode, the cooling system can continue to run at a low speed corresponding to a reduced flow to keep servers cool while at the same time extending the life of the filters 103 to prevent catastrophic failure while waiting for a service technician or part to become available.

In embodiments, filters 103 and pumps 107 may be monitored according to any preselected schedule, which may be dynamically modified or customized. In embodiments, a plurality of recorded data points corresponding to differential pressure and pump speed are collected, determined, and recorded by the system, such as obtained by the pressure sensors and pump sensors and output to a controller. As shown, for each filter 103 in the system, a first differential pressure (DP1) and a corresponding first pump speed (PS1) are determined and recorded by the system. According to the preselected schedule, a second differential pressure (DP2) and a corresponding second pump speed (PS2) are determined and recorded by the system, and so on for each future scheduled differential pressure (DPN) and corresponding pump speed (PSN). Schedules may be based on seconds, minutes, hours, days, weeks, months, and any combination thereof depending on the filters 103 and application. In embodiments, the first differential pressure (DP1) recorded may correspond to the reference differential pressure measurement serving at the baseline against which future differential pressure measurements are successively compared.

In the example monitoring scheme shown in FIG. 3, a first differential pressure (DP1) and first pump speed (PS1) are recorded at a first time (T=1), followed by a second differential pressure (DP2) and second pump speed (PS2) at a second time (T=2), and so on for future differential pressures (DPN) and pump speeds (PSN) and future times (T=N). The system is configured to monitor each data point and compare the data points to determine the real-time performance of the system filters 103 and pumps 107. In embodiments, thresholds corresponding to measurement differences may be preselected to change the system performance, for instance pump speed, when the preselected thresholds are exceeded.

For each pump/filter circuit, a differential pressure calculation is performed to determine real-time system performance and performance trends to make predictions of future performance and maintenance needs. When the differential pressure is 'stable' or increasing at an acceptable rate the system may operate in a 'normal' operating mode in which the pump speed is stable or increasing at a corresponding acceptable rate to maintain sufficient flow. In other words, when the system is performing at acceptable levels in terms of filter performance and/or pump speed, the system may operate in the normal operating condition. When the differential pressure and/or pump speed increases to an unacceptable level indicative of a clogged or failing filter (e.g., nearing end of useful life), the system may create a warning/alarm including a prediction of when the filter performance and/or pump speed will reach an unacceptable level requiring the system to enter into the 'limp' mode, manually or automatically. Warnings/alarms may be visual and/or audible, may increase in frequency as the system performance degrades, etc.

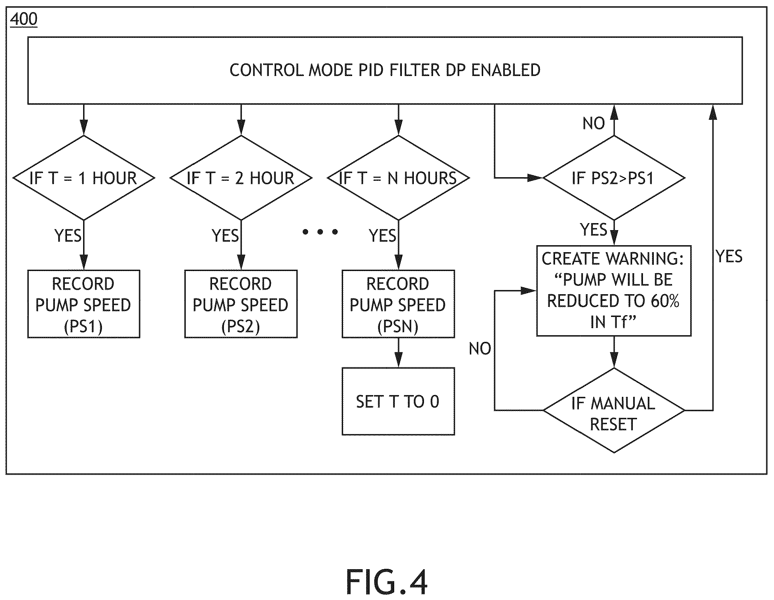

FIG. 4 is a flow chart of a control scheme 400 for the pump speed to reduce the flow when a filter has not been replaced and the differential pressure is nearing a preselected failure point. Like the control scheme 300, the pump speed (PS) is recorded according to a preselected schedule such that successive pump speeds (PS1, PS2...PSN) are recorded at respective time (T=1, T=2...T=N). By changing the sampling rate and increasing the number of sample points, the resolution can be increased. The system may generate a warning/alarm when the pump speed increases at a high rate, approaches an unacceptable pump speed, etc., and the system may operate to reduce the pump speed to or enter the 'limp' mode as discussed above.

In embodiments, the control scheme 400 thus monitors pump speed on a set schedule to track how pump speed changes as a filter nears its failure point. By recording successive pump speeds over time, and increasing sampling frequency for better resolution, the system can detect rapid or excessive increases in pump speed. When such conditions occur, the system can trigger a warning or alarm and automatically reduce pump speed of place the system into a protective mode.

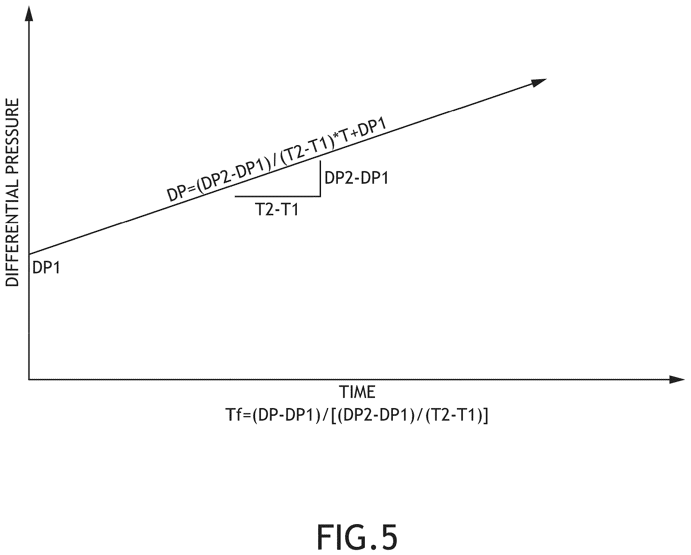

FIG. 5 is a graph illustrating a predictive maintenance calculation for when the filter may require servicing and/or replacement. According to the calculation, the differential pressure (DP) across the one or more filters 103 is calculated by subtracting the high side pressure from the low side pressure. Time (T1) is the time at which the first differential pressure measurement is recorded and time (T2) is the time at which the second measurement is recorded. The first differential pressure (DP1) is the differential pressure across a new, clean filter while the second differential pressure (DP2) is the differential pressure recorded at some time later. By repeating the differential pressure recording process according to a monitoring schedule, the data points can be plotted to find the slope of the plot to extrapolate when the filter will need to be serviced and/or replaced. In embodiments, filter failure (Tf) may represent the time at which the filter 103 requires replacement and may be associated with a warning/alarm indicated on the controller and/or output to a remote controller.

In embodiments, the system is thus configured to measure DP across one or more filters by subtracting high-side pressure from low-side pressure. A baseline DP (DP1) may be recorded for a new filter time (T1), and a later DP (DP2) may be recorded at a later time (T2). Repeated measurements over time allow plotting DP versus time, whose slope can be used to predict when a filter will reach a failure point (Tf). This predicted time can indicate when the filter should be serviced or replaced and can trigger a warning or alarm on the controller or a remote system.

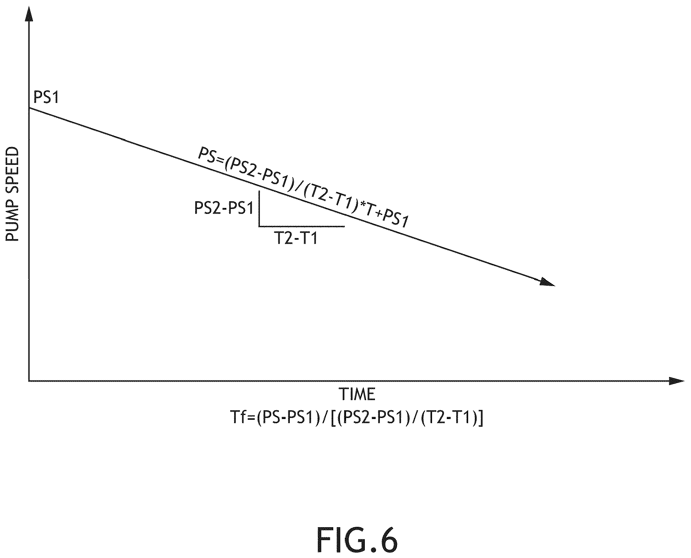

FIG. 6 is a graph illustrating a predictive maintenance calculation for when the differential pressure across a filter 103 is nearing a preselected threshold level requiring the pump speed to be ramped down, and through extrapolation, predicts when pump speed may be too low to provide sufficient liquid flow. The calculations shown in FIGS. 5 and 6 may be used in the control routines to predict when the filter will be complete clogged (e.g., filled) beyond a useful level, as well as a calculation to limit the technical liquid pump speed based on pressure buildup in the filter 103. The second calculation illustrated in FIG. 6 predicts the decrease in pump speed using a control mode that may override a system controller. In use, the second calculation may cause the controller to reduce the pump speed when a large differential pressure is determined. In embodiments, a pump manufacturer may provide a minimum pump speed for a liquid cooling unit required to maintain sufficient cooling. If this minimum threshold is not met, sensitive electronic equipment may overheat due to insufficient heat rejection. Similarly to the equation shown in FIG. 5, time (T) represents the times at which the pump speed (PS) measurements are recorded. By finding the slope of the line and extrapolating, the minimum functional pump speed may be determined and a corresponding warning/alarm issued by the controller indicating a filter change requirement. For example, if a minimum flow rate of 100 GPM is needed, which requires 60% of the pump speed, then the control routine determines at what time (Tf) the pump speed will slow down to the 60% speed, to prevent the filter 103 from blowing out and warn the user of that time.

In embodiments, the system controller is configured to receive, determine, instruct, execute, etc. The controller may include one or more processors, memory, and a communication interface, wherein the processor provides processing functionality for at least the respective controller and may include any number of processors, microcontrollers, circuitry, field programmable gate array (FPGA) or other processing systems, and resident or external memory for storing data, executable code, and other information accessed or generated by respective controllers. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the processor, such as software programs and/or code segments, or other data to instruct the processor, and possibly other components of the controller, to perform the functionality described herein. Thus, the memory can store data, such as a program of instructions for operating the respective controller, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the respective controller. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the respective controller and the processor. It should be noted that while the communication interface is described as a component of the respective controller, one or more components of the communication interface may be implemented as external components communicatively coupled to the respective controller via a wired and/or wireless connection. The respective controller may also include and/or connect to one or more input/output (I/O) devices (e.g., human machine interface (HMI) devices) via the communication interface. In embodiments, the communication interface may include a transmitter and receiver.

From the above description, it is clear that the present disclosure disclosed herein is well adapted to achieve the objectives and to attain the advantages mentioned herein as well as those inherent in the present disclosure disclosed herein. While exemplary embodiments of the present disclosure disclosed herein have been described for purposes of this disclosure, it will be understood that numerous changes may be made which will readily suggest themselves to those skilled in the art and which are accomplished within the broad scope and coverage of the present disclosure disclosed and claimed herein.
The disclosure comprises the following items:
1. A liquid cooling unit comprising:
   a liquid circuit configured to recirculate a liquid;
   one or more pumps disposed in the liquid circuit configured to pump the liquid;
   one or more filters disposed in the liquid circuit configured to filter the liquid;
   pressure sensors disposed in the liquid circuit configured to measure liquid pressure in the liquid circuit; and
   a controller, communicatively coupled to the pressure sensors, and including one or more processors, configured to:
      receive outputs from the pressure sensors; and
      determine, from the outputs received from the pressure sensors, a differential pressure across the one or more filters.
2. The liquid cooling unit of item 1, wherein the pressure sensors include, for each of the one or more filters, a first pressure sensor disposed at an inlet side of the filter and a second pressure sensor disposed at an outlet side of the filter, wherein the differential pressure is determined by a difference between the liquid pressure entering the filter and the liquid pressure exiting the filter.
3. The liquid cooling unit of item 1 or item 2, wherein the controller is further configured to:
   implement a monitoring scheme for monitoring the differential pressure for the one or more filters according to a preselected monitoring schedule.
4. The liquid cooling unit of any preceding item, wherein the controller is further configured to extrapolate, from the differential pressures monitored according to the preselected monitoring schedule, an estimation of when the one or more filters will perform at a level below a preselected threshold performance level.
5. The liquid cooling unit of any preceding item, wherein the controller is further configured to:
   determine a reference differential pressure for each of the one or more filters at a time of installation of the one or more filters in the liquid circuit.
6. The liquid cooling unit of any preceding item, wherein the controller is further communicatively coupled to the one or more pumps, and is further configured to, when the liquid cooling unit operates with the one or more filters near or at end of life, control the one or more pumps to operate in a low pump speed operating mode.
7. The liquid cooling unit of any preceding item, wherein the controller is further configured to generate one or more alarms indicative of a need for at least one of filter maintenance or filter replacement.
8. The liquid cooling unit of any preceding item, wherein the liquid cooling unit is a self-contained unit comprising a housing and one or more plate heat exchangers disposed in the housing.
9. The liquid cooling unit of any preceding item, wherein the liquid cooling unit is configured to be utilized in a data center to cool electronic equipment.
10. A liquid cooling system comprising:
   a liquid circuit configured to recirculate a cooling liquid;
   one or more pumps disposed in the liquid circuit configured to pump the cooling liquid;
   one or more filters disposed in the liquid circuit configured to filter the cooling liquid;
   pressure sensors disposed in the liquid circuit configured to measure liquid pressure; and
   a controller, communicatively coupled to the pressure sensors, and including one or more processors, configured to:
      receive outputs from the pressure sensors; and
      determine, from the outputs received from the pressure sensors, a differential pressure across the one or more filters.
11. The liquid cooling system of item 10, wherein the pressure sensors include, for each of the one or more filters, a first pressure sensor disposed at an inlet side of the filter and a second pressure sensor disposed at an outlet side of the filter, wherein the differential pressure is determined by a difference between the liquid pressure entering the filter and the liquid pressure exiting the filter.
12. The liquid cooling system of item 10 or item 11, wherein the controller is further configured to:
   implement a monitoring scheme for monitoring the differential pressure for the one or more filters according to a preselected monitoring schedule.
13. The liquid cooling system of any of items 10-12, wherein the controller is further configured to extrapolate, from the differential pressures monitored according to the preselected monitoring schedule, an estimate of when the one or more filters will perform at a level below a preselected threshold performance level.
14. The liquid cooling system of any of items 10-13, wherein the controller is further configured to:
   determine a reference differential pressure for each of the one or more filters at a time of installation of the one or more filters in the closed liquid circuit.
15. The liquid cooling system of any of items 10-14, wherein the controller is further communicatively coupled to the one or more pumps, and is further configured to, when the liquid cooling system operates with the one or more filters near or at end of life, control the one or more pumps to operate in a low pump speed operating mode.
16. The liquid cooling system of any of items 10-15, wherein the controller is further configured to generate one or more alarms indicative of a need for at least one of filter maintenance or filter replacement.
17. The liquid cooling system of any of items 10-16, wherein the liquid cooling system is configured to be utilized in a data center to cool electronic equipment.
18. A method for monitoring health of one or more filters in a liquid cooling application, wherein the liquid cooling application comprises:
   a liquid circuit configured to recirculate a liquid;
   one or more pumps disposed in the liquid circuit configured to pump the liquid;
   one or more filters disposed in the liquid circuit configured to filter the liquid;
   pressure sensors disposed in the liquid circuit configured to measure liquid pressure in the liquid circuit; and
   a controller, communicatively coupled to the pressure sensors, and including one or more processors;
   the method comprising:
   measuring, by the pressure sensors, liquid pressure at an inlet side and at an outlet side of each of the one or more filters; and
   determining, by the controller from the liquid pressure measured by the pressure sensors, a differential pressure across each of the one or more filters.
19. The method or item 18, further comprising:
   implementing, by the controller, a monitoring scheme for monitoring the differential pressure for each of the one or more filters according to a preselected monitoring schedule.
20. The method of item 18 or item 19, further comprising:
   extrapolating, by the controller, from the differential pressures monitored according to the preselected monitoring schedule, an estimation of when the one or more filters will perform at a level below a preselected threshold performance level.
21. The method of any of items 18-20, further comprising:
   determining, by the controller, a reference differential pressure for each of the one or more filters at a time of installation of the one or more filters in the liquid circuit.
22. The method of any of items 18-21, wherein the controller is further communicatively coupled to the one or more pumps, and wherein the method further comprises:
   controlling, by the controller, when the liquid cooling application operates with the one or more filters near or at end of life, operating the one or more pumps in a low pump speed operating mode.
23. The method of any of items 18-22, wherein the method further comprises:
   generating, by the controller, one or more alarms indicative of a need for at least one of filter maintenance or filter replacement.

## Claims

1. A liquid cooling unit comprising:
a liquid circuit configured to recirculate a liquid;
one or more pumps disposed in the liquid circuit configured to pump the liquid;
one or more filters disposed in the liquid circuit configured to filter the liquid;
pressure sensors disposed in the liquid circuit configured to measure liquid pressure in the liquid circuit; and
a controller, communicatively coupled to the pressure sensors, and including one or more processors, configured to:
receive outputs from the pressure sensors; and
determine, from the outputs received from the pressure sensors, a differential pressure across the one or more filters.

2. The liquid cooling unit of claim 1, wherein the pressure sensors include, for each of the one or more filters, a first pressure sensor disposed at an inlet side of the filter and a second pressure sensor disposed at an outlet side of the filter, wherein the differential pressure is determined by a difference between the liquid pressure entering the filter and the liquid pressure exiting the filter.

3. The liquid cooling unit of claim 1 or claim 2, wherein the controller is further configured to:
implement a monitoring scheme for monitoring the differential pressure for the one or more filters according to a preselected monitoring schedule.

4. The liquid cooling unit of claim 3, wherein the controller is further configured to extrapolate, from the differential pressures monitored according to the preselected monitoring schedule, an estimation of when the one or more filters will perform at a level below a preselected threshold performance level.

5. The liquid cooling unit of any preceding claim, wherein the controller is further configured to:
determine a reference differential pressure for each of the one or more filters at a time of installation of the one or more filters in the liquid circuit.

6. The liquid cooling unit of any preceding claim, wherein the controller is further communicatively coupled to the one or more pumps, and is further configured to, when the liquid cooling unit operates with the one or more filters near or at end of life, control the one or more pumps to operate in a low pump speed operating mode.

7. The liquid cooling unit of any preceding claim, wherein the controller is further configured to generate one or more alarms indicative of a need for at least one of filter maintenance or filter replacement.

8. A method for monitoring health of one or more filters in a liquid cooling application, wherein the liquid cooling application comprises:
a liquid circuit configured to recirculate a liquid;
one or more pumps disposed in the liquid circuit configured to pump the liquid;
one or more filters disposed in the liquid circuit configured to filter the liquid;
pressure sensors disposed in the liquid circuit configured to measure liquid pressure in the liquid circuit; and
a controller, communicatively coupled to the pressure sensors, and including one or more processors;
the method comprising:
measuring, by the pressure sensors, liquid pressure at an inlet side and at an outlet side of each of the one or more filters; and
determining, by the controller from the liquid pressure measured by the pressure sensors, a differential pressure across each of the one or more filters.

9. The method or claim 8, further comprising:
implementing, by the controller, a monitoring scheme for monitoring the differential pressure for each of the one or more filters according to a preselected monitoring schedule.

10. The method of claim 8 or claim 9, further comprising:
extrapolating, by the controller, from the differential pressures monitored according to the preselected monitoring schedule, an estimation of when the one or more filters will perform at a level below a preselected threshold performance level.

11. The method of any of claims 8-10, further comprising:
determining, by the controller, a reference differential pressure for each of the one or more filters at a time of installation of the one or more filters in the liquid circuit.

12. The method of any of claims 8-11, wherein the controller is further communicatively coupled to the one or more pumps, and wherein the method further comprises:
controlling, by the controller, when the liquid cooling application operates with the one or more filters near or at end of life, operating the one or more pumps in a low pump speed operating mode.

13. The method of any of claims 8-12, wherein the method further comprises:
generating, by the controller, one or more alarms indicative of a need for at least one of filter maintenance or filter replacement.
